# EUROPEAN PATENT APPLICATION

(11) **EP 4 395 099 A1**
(43) Date of publication of application: **03.07.2024**
(21) Application number: 22861427.7
(22) Date of filing: 25.08.2022
(51) Int. Cl.: H02J 3/32, H02J 3/14, H02J 3/38, H02J 7/35, H02J 13/00

(54) **POWER MANAGEMENT DEVICE AND POWER MANAGEMENT METHOD**

(30) Priority: 27.08.2021 JP 2021139354
(71) Applicant: Kyocera Corporation, Kyoto-shi Kyoto 612-8501 (JP)
(72) Inventor: NAKAZAWA, Ryota, Kyoto-shi, Kyoto 612-8501 (JP); AIKAWA, Shinji, Kyoto-shi, Kyoto 612-8501 (JP)
(74) Representative: TBK
(86) International application number: PCT/JP2022/032006
(87) International publication number: WO 2023/027139

(57) **Abstract**

A power management apparatus includes a manager configured to manage a facility comprising a power generation apparatus and a power storage apparatus, and a controller configured to create a charge-discharge plan for the power storage apparatus, based on priorities of two or more modes of charge-discharge control for different purposes of use of the power storage apparatus. The two or more modes of charge-discharge control include at least first control to secure a power storage capacity of the power storage apparatus to curb demand power of the facility to a predetermined power or less by discharging the power storage apparatus in a predetermined time interval, and second control to secure a free capacity of the power storage apparatus to charge the power storage apparatus with surplus power of the power generation apparatus.

## Description

### TECHNICAL FIELD

The present invention relates to a power management apparatus and a power management method.

### BACKGROUND OF INVENTION

In recent years, a mechanism (hereinafter, a virtual power plant (VPP)) has attracted attention in which a distributed power supply such as a power storage apparatus is used in order to stabilize a power supply-demand balance of a power system. A power management apparatus managing one or more facilities needs to control the distributed power supply installed in the facility so that a difference between a planned value related to demand power of the facility and an actual value related to the demand power of the facility is a predetermined difference or less. In such a mechanism, it is important to appropriately create a charge-discharge plan for the power storage apparatus.

For example, as a method of creating the charge-discharge plan for the power storage apparatus, from a viewpoint of a business continuity plan (BCP) or the like, there has been proposed a method of creating the charge-discharge plan for the power storage apparatus while securing a predetermined capacity (hereinafter, a BCP capacity) as a power storage capacity (remaining amount of power storage) of the power storage apparatus. In such a method, the power storage capacity usable for purposes other than the BCP is increased by appropriately estimating the BCP capacity (for example, Patent Document 1).

### CITATION LIST

### PATENT LITERATURE

Patent Document 1: JP 2018-191434 A

### SUMMARY

In a disclosure, a power management apparatus includes a manager configured to manage a facility including a power generation apparatus and a power storage apparatus, and a controller configured to create a charge-discharge plan for the power storage apparatus, based on priorities of two or more modes of charge-discharge control for different purposes of use of the power storage apparatus. The two or more modes of charge-discharge control include at least first control to secure a power storage capacity of the power storage apparatus to curb demand power of the facility to a predetermined power or less by discharging the power storage apparatus in a predetermined time interval, and second control to secure a free capacity of the power storage apparatus to charge the power storage apparatus with surplus power of the power generation apparatus.

In a disclosure, a power management method includes managing a facility including a power generation apparatus and a power storage apparatus, and creating a charge-discharge plan for the power storage apparatus, based on priorities of two or more modes of charge-discharge control for different purposes of use of the power storage apparatus. The two or more modes of charge-discharge control include at least first control to secure a power storage capacity of the power storage apparatus to curb demand power of the facility to a predetermined power or less in a predetermined time interval, and second control to secure a free capacity of the power storage apparatus to charge the power storage apparatus with surplus power of the power generation apparatus.

### BRIEF DESCRIPTION OF THE DRAWINGS

FIG. 1 is a diagram illustrating a power management system 1 according to an embodiment.
FIG. 2 is a diagram illustrating a facility 100 according to the embodiment.
FIG. 3 is a diagram illustrating a power management server 200 according to the embodiment.
FIG. 4 is a diagram illustrating an EMS 150 according to the embodiment.
FIG. 5 is a diagram illustrating an overview of charge-discharge controls according to the embodiment.
FIG. 6 is a diagram illustrating a power storage capacity of a power storage apparatus 120 according to the embodiment.
FIG. 7 is a diagram illustrating details of the charge-discharge controls according to the embodiment.
FIG. 8 is a diagram illustrating a power management method according to an embodiment.

### DESCRIPTION OF EMBODIMENTS

Embodiments will be described below with reference to the accompanying drawings. Note that in the following description of the drawings, the same or similar components will be denoted by the same or similar reference signs. However, the drawings are schematic.

### Embodiment

### Power Management System

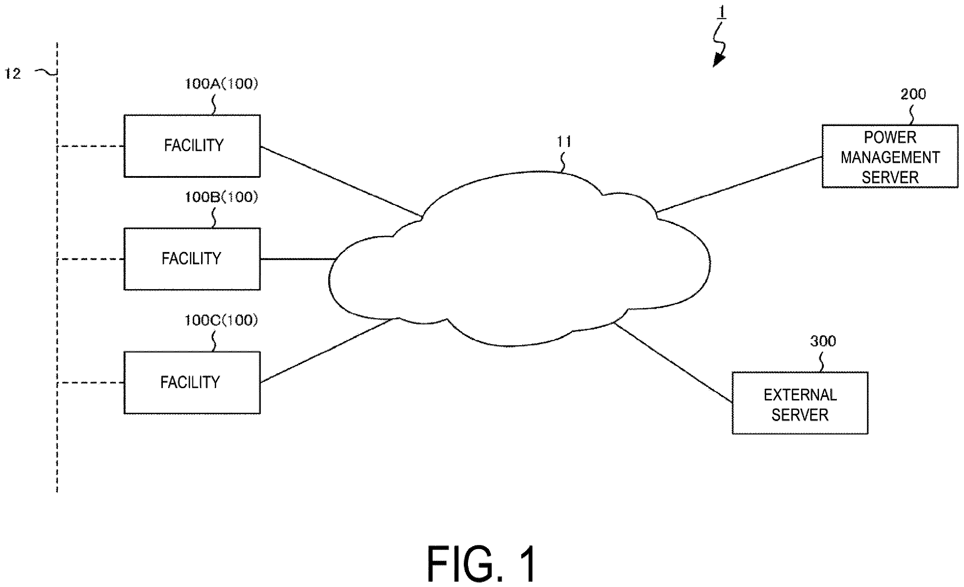

A power management system according to an embodiment will be described below. As illustrated in FIG. 1, a power management system 1 includes a facility 100. The power management system 1 may include a power management server 200 and an external server 300.

Here, the facility 100, the power management server 200, and the external server 300 are configured to be communicable with each other via a network 11. The network 11 may include the Internet, a dedicated line such as a virtual private network (VPN), or a mobile communication network.

The facility 100 is interconnected with the power system 12, and may receive power from the power system 12 or may supply power to the power system 12. The power from the power system 12 to the facility 100 may be referred to as flow power, purchased power, or demand power. The power from the facility 100 to the power system 12 may be referred to as reverse flow power or selling power. FIG. 1 illustrates facilities 100A to 100C as examples of the facility 100.

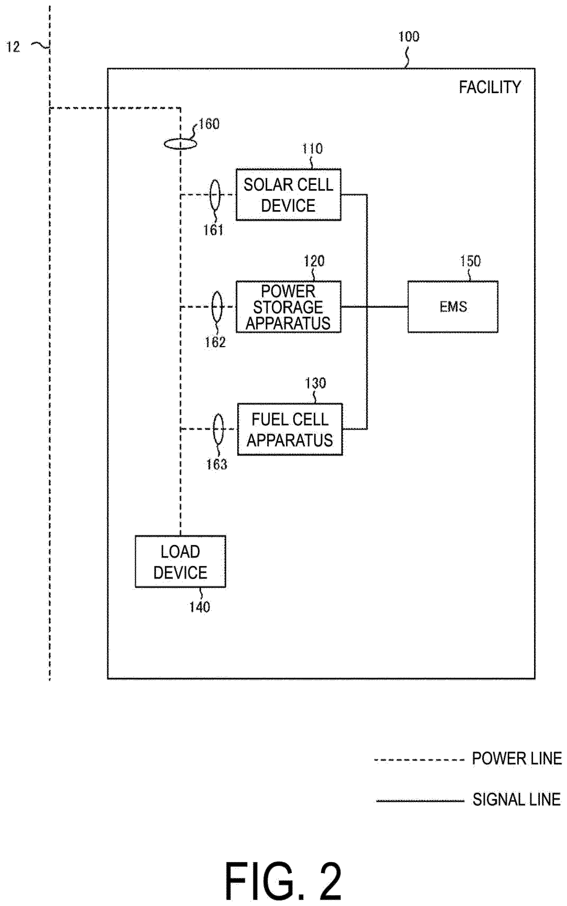

The facility 100 may be and is not particularly limited to a facility such as, for example, a residence, a shop, or an office. The facility 100 may be a residential complex including two or more residences. The facility 100 may be a complex facility including at least two facilities of residences, stores, and offices. The details of the facility 100 will be described below (see FIG. 2).

The power management server 200 may be managed by a business operator such as a local power company. The local power company may be a power company operated by a municipality or the like. The power management server 200 is a server managed by a business operator, such as a power generation operator, a power transmission and distribution operator, a retailer, or a resource aggregator. The resource aggregator may be a power company that adjusts the power supply-demand balance in the power system 12 in a virtual power plant (VPP). Adjusting the power supply-demand balance may include a transaction of exchanging the reduced demand power (flow power) of the facility 100 for value (hereinafter referred to as negawatt transaction). Adjusting the power supply-demand balance may include a transaction of exchanging the increased reverse flow power for value. The resource aggregator may be a power company that supplies the reverse flow power to the power generation operator, the power transmission and distribution operator, the retailer, or the like, in the VPP.

The power management server 200 may manage information on power outage (hereinafter referred to as planned power outage information) of the facility 100. The planned power outage information may include information on a predetermined planned power outage. The planned power outage information may include information indicating a time zone in which the planned power outage occurs.

The external server 300 is a server that manages various types of information. For example, the external server 300 is a server that manages weather information. The external server 300 may manage information related to generated power (output power) of a solar cell apparatus 110 (hereinafter referred to as power generation impact information). The power generation impact information may include weather information, temperature information, humidity information, and solar radiation amount information. The external server 300 may manage information on the power outage of the facility 100 (hereinafter referred to as power outage impact information). The power outage impact information may include disaster information such as an emergency warning for heavy rain, flooding information, a landslide alert information, flood hazard information, a heavy rain warning, flood warning, an overflow alert, an overflow advisory, a heavy rain advisory, and a flood advisory.

### Facility

The facility according to the embodiment will be described below. As illustrated in FIG. 2, the facility 100 includes the solar cell apparatus 110, a power storage apparatus 120, a fuel cell apparatus 130, a load device 140, and an energy management system (EMS) 150. The facility 100 may include a measurement device 160, a measurement device 161, a measurement device 162, and a measurement device 163.

The solar cell apparatus 110 is a distributed power supply that generates power in response to sunlight or other light. For example, the solar cell apparatus 110 is composed of a power conditioning system (PCS) and a solar panel. In the embodiment, the solar cell apparatus 110 may be an example of a power generation apparatus provided in the facility 100.

The power storage apparatus 120 is a distributed power supply that charges the power and discharges the power. For example, the power storage apparatus 120 is composed of a PCS and a power storage cell. In the embodiment, the power storage apparatus 120 may be an example of a power storage apparatus provided in the facility 100.

The fuel cell apparatus 130 is a distributed power supply that generates power using a fuel. For example, the fuel cell apparatus 130 is composed of the PCS and the fuel cell.

For example, the fuel cell apparatus 130 may be a solid oxide fuel cell (SOFC), a polymer electrolyte fuel cell (PEFC), a phosphoric acid fuel cell (PAFC), and a molten carbonate fuel cell (MCFC).

The load device 140 is a device that consumes power. For example, the load device 140 may include a video device, an audio device, a refrigerator, a washing machine, an air conditioner, and a personal computer.

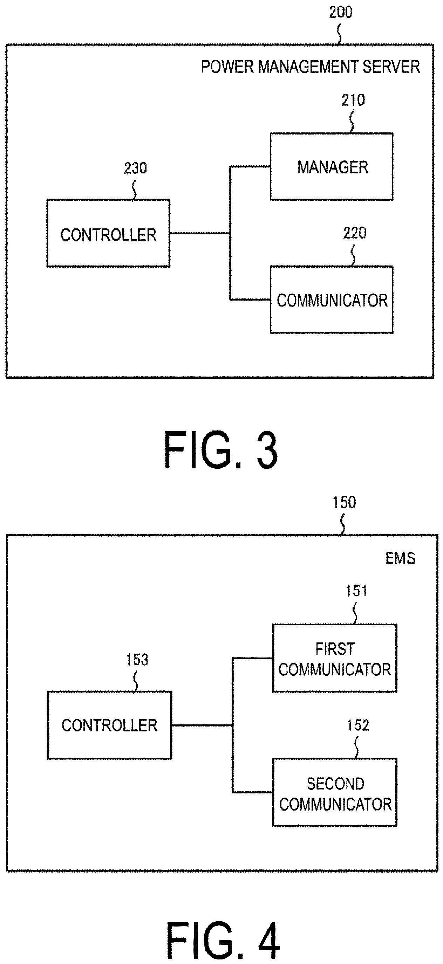

The EMS 150 manages the power related to the facility 100. The EMS 150 may control the solar cell apparatus 110, the power storage apparatus 120, the fuel cell apparatus 130, and the load device 140. In the embodiment, the EMS 150 is exemplified as a device receiving a control command from the power management server 200. However, such a device may be referred to as a gateway or simply a control unit. The details of the EMS 150 will be described below (see FIG. 4).

The measurement device 160 measures the flow power from the power system 12 to the facility 100. The measurement device 160 may measure the reverse flow power from the facility 100 to the power system 12. For example, the measurement device 160 may be a smart meter that belongs to a power company. The measurement device 160 may transmit an information element indicating the measurement result (an integrated value of flow power or reverse flow power) in a first interval (for example, 30 minutes) to the EMS 150 at the first interval. The measurement device 160 may transmit an information element indicating the measurement result in a second interval (for example, one minute) shorter than the first interval to the EMS 150.

The measurement device 161 measures the output power (generated power) of the solar cell apparatus 110. The measurement device 161 may transmit an information element indicating the measurement result in the second interval (for example, one minute) shorter than the first interval to the EMS 150 at the second interval. The measurement result may be expressed as an instantaneous value or an integrated value.

The measurement device 162 measures a charging power and a discharging power of the power storage apparatus 120. The measurement device 162 may transmit an information element indicating the measurement result in the second interval (for example, one minute) shorter than the first interval to the EMS 150 at the second interval. The measurement result may be expressed as an instantaneous value or an integrated value.

The measurement device 163 measures the output power (generated power) of the fuel cell apparatus 130. The measurement device 163 may transmit an information element indicating the measurement result in the second interval (for example, one minute) shorter than the first interval to the EMS 150 at the second interval. The measurement result may be expressed as an instantaneous value or an integrated value.

### Power Management Server

The power management server will be described below. As illustrated in FIG. 3, the power management server 200 includes a manager 210, a communicator 220, and a controller 230. In the embodiment, the power management server 200 is an example of a power management apparatus. The power management server 200 is communicable with the facility 100 via the network 11, and may be considered as a server operating on a cloud.

The manager 210 includes a storage medium such as a solid state drive (SSD), a hard disk drive (HDD), a nonvolatile semiconductor memory, and manages information related to the facility 100. For example, information relating to the facility 100 includes a type of the distributed power supply (the solar cell apparatus 110, the power storage apparatus 120, or the fuel cell apparatus 130) provided in the facility 100, and specifications of the distributed power supply provided in the facility 100. The specifications may include a rated generated power of the solar cell apparatus 110, a rated charge-discharge power of the power storage apparatus 120, and a rated output power of the fuel cell apparatus 130. The specifications may include a rated capacity and a maximum charge-discharge power of the power storage apparatus 120.

In the embodiment, the manager 210 is an example of a manager managing the facility 100 including the power generation apparatus (for example, the solar cell apparatus 110) and the power storage apparatus 120.

The communicator 220 includes a communication module, and communicates with a local control device 360 via the network 11. The communication module may be a wireless communication module compliant with standards such as IEEE 802.1 1a/b/g/n/ac/ax, ZigBee, Wi-SUN, LTE, 5G, and 6G, or may be a wired communication module compliant with standards such as IEEE 802.3.

In the embodiment, the communicator 220 transmits the control command to the EMS 150. The control command is transmitted in accordance with a charge-discharge plan created created by the controller 230 described below.

The controller 230 may include at least one processor. The at least one processor may be constituted by a single integrated circuit (IC) or a plurality of circuits (such as integrated circuits and/or discrete circuits) connected communicable with each other.

In the embodiment, the controller 230 is an example of a controller creating the charge-discharge plan for the power storage apparatus, based on priorities of two or more modes of charge-discharge control for different purposes of use of the power storage apparatus 120.

The two or more modes of charge-discharge control include at least first control securing a power storage capacity of the power storage apparatus 120 in order to curb demand power of the facility 100 to a predetermined power or less by discharging the power storage apparatus 120 in a predetermined time interval, and second control securing a free capacity of the power storage apparatus in order to charge the power storage apparatus 120 with surplus power of the power generation apparatus. The predetermined time interval may be, for example, a time interval such as 30 minutes. The charge-discharge control will be described in detail below.

### EMS

The EMS according to the embodiment will be described below. As illustrated in FIG. 4, the EMS 150 includes a first communicator 151, a second communicator 152, and a controller 153.

The first communicator 151 is composed of a communication module. The communication module may be a wireless communication module compliant with a standard such as IEEE 802.11a/b/g/n/ac/ax, ZigBee, Wi-SUN, LTE, 5G, 6G, or the like, or may be a wired communication module compliant with a standard such as IEEE 802.3, a unique dedicated protocol, or the like.

The first communicator 151 may communicate with the power management server 200 via the network 11. The first communicator 151 may communicate with the external server 300 via the network 11.

The second communicator 152 is composed of a communication module. The communication module may be a wireless communication module compliant with a standard such as IEEE 802.11a/b/g/n/ac/ax, ZigBee, Wi-SUN, LTE, 5G, 6G, or the like, or may be a wired communication module compliant with a standard such as IEEE 802.3, a unique dedicated protocol, or the like.

The second communicator 152 may execute communication with the solar cell apparatus 110 and the power storage apparatus 120. Although signal lines are omitted in FIG. 2, the second communicator 152 may execute communication with the load device 140, and may execute communication with the measurement device 160, the measurement device 161, the measurement device 162, and the measurement device 163.

The controller 153 controls the EMS 150. The controller 153 may include at least one processor. The at least one processor may be composed of a single integrated circuit (IC) or two or more circuits (such as integrated circuits and/or discrete circuits) connected communicable with each other.

The controller 153 may control the solar cell apparatus 110, the power storage apparatus 120, and the fuel cell apparatus 130. The controller 153 may control the load device 140. For example, the controller 153 controls the charge-discharge of the power storage apparatus 120, based on the control command received from the power management server 200. The control command is transmitted from the power management server 200 in accordance with the charge-discharge plan created by the power management server 200.

### Overview of Charge-discharge Control

An overview of the charge-discharge control according to the embodiment will be described below. The charge-discharge controls include the two or more modes of charge-discharge control for different purposes of use of the power storage apparatus 120. Here, the overview of the charge-discharge plan will be described by taking as an example a case in which the charge-discharge plan is created in a target interval (for example, one day from 0:00 to 24:00).

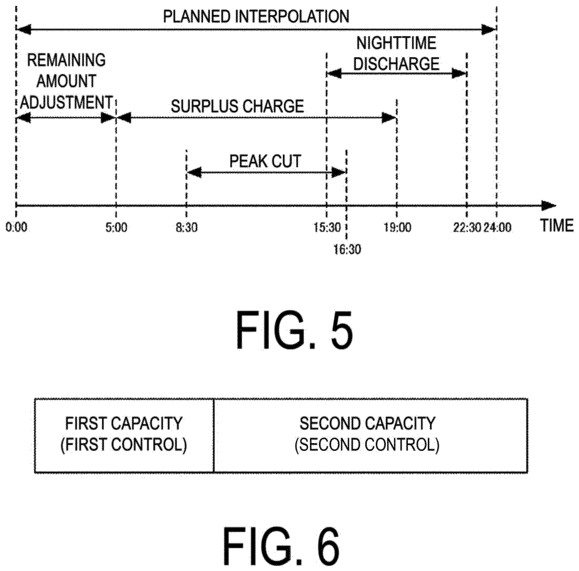

As illustrated in FIG. 5, the modes of charge-discharge control for different purposes of use of the power storage apparatus 120 include peak cut, surplus charge, remaining amount adjustment, nighttime discharge, and planned interpolation.

The peak cut is control (discharge control) to curb the demand power of the facility 100 to a predetermined power or less by discharging the power storage apparatus 120 in a predetermined time interval. The peak cut can be executed in a time zone (for example, 8:30 to 16:30) in which power consumption of the facility 100 (for example, the power consumption of the load device 140) is assumed to exceed a predetermined power.

The surplus charge is control (charge control) to charge the power storage apparatus 120 with the surplus power of the power generation apparatus. For example, the surplus power is power obtained by subtracting the power consumption of the facility 100 (for example, power consumption of the load device 140) from the output power of the solar cell apparatus 110. The surplus charge can be executed in a time zone (for example, 5:00 to 19:00) in which the output power of the solar cell apparatus 110 is assumed to be obtained.

The remaining amount adjustment is control to adjust the remaining amount of power storage in the power storage apparatus 120. For example, the remaining amount adjustment may include control to discharge the power storage apparatus 120 before time (for example, 5:00) at which the surplus charge is assumed to start when an excess of the surplus power is assumed based on a predicted value of the surplus power. The remaining amount adjustment may include control to charge the power storage apparatus 120 before time (for example, 5:00) at which the surplus charge is assumed to start when a shortage of the surplus power is assumed based on the predicted value of the surplus power. The remaining amount adjustment can be executed in a time zone (for example, 0:00 to 5:00) suitable for adjustment of the remaining amount of power storage in the power storage apparatus 120.

Here, the surplus power may be specified by a difference between a predicted value of the output power of the solar cell apparatus 110 and a predicted value of the power consumption of the facility 100. The excess of the surplus power may mean that the power storage apparatus 120 cannot be charged with the surplus power in the time zone in which the surplus charge can be executed. The shortage of the surplus power may mean that power for curbing the demand power of the facility 100 to be the predetermined power or less cannot be discharged from the power storage apparatus 120 in the time zone in which the peak cut can be executed. The demand power of the facility 100 is power obtained by subtracting the output power of the solar cell apparatus 110 from the power consumption of the facility 100 (for example, power consumption of the load device 140).

As described above, the remaining amount adjustment includes control to secure the power storage capacity of the power storage apparatus 120 for the peak cut. In other words, the remaining amount adjustment is an example of the first control to secure the power storage capacity of the power storage apparatus 120 in order to curb the demand power of the facility 100 to the predetermined power or less by discharging the power storage apparatus 120 in the predetermined time interval. The remaining amount adjustment includes control to secure a free capacity of the power storage apparatus 120 for the surplus charge. In other words, the remaining amount adjustment is an example of the second control to secure the free capacity of the power storage apparatus in order to charge the power storage apparatus 120 with the surplus power of the power generation apparatus.

The nighttime discharge is control to discharge the power storage apparatus 120 when a predicted value of a price of the purchased power is assumed to be higher than a threshold value. The threshold value may be determined by a user setting. The nighttime discharge can be executed in a time zone (for example, 15:30 to 22:30) suitable for discharging the power storage apparatus 120.

The planned interpolation is control to interpolate the charge-discharge plan for the power storage apparatus 120. For example, the planned interpolation is control to charge and discharging the power storage apparatus 120 when the peak cut, the surplus charge, and the nighttime discharge are not executed. The planned interpolation can be executed in a target interval (for example, one day from 0:00 to 24:00) for which the charge-discharge plan is created.

As illustrated in FIG. 6, the capacity of the power storage apparatus 120 may include a first capacity and a second capacity. The first capacity is a capacity related to power discharged by the peak cut. In other words, the first capacity is the power storage capacity secured by the first control. The second capacity is a capacity related to power charged by the surplus charge. In other words, the second capacity is the free capacity secured by the second control.

Although omitted in FIG. 6, the capacity of the power storage apparatus 120 may include a capacity related to power to be used in an emergency (hereinafter referred to as a business continuity plan (BCP) capacity) separately from the first capacity and the second capacity. The emergency is a parallel-off state (for example, a power outage state) in which the facility 100 is parallel-off from the power system 12.

### Details of Charge-discharge Control

Details of the charge-discharge control according to the embodiment will be described below. Here, the overview of the charge-discharge plan will be described by taking as an example a case in which the charge-discharge plan is created in a target interval (for example, one day from 0:00 to 24:00). The power management server 200 may create the charge-discharge plan for the power storage apparatus 120 at first timing, and correct the charge-discharge plan for the power storage apparatus 120 at second timing later than the first timing. For example, the first timing may be 6:00 on the previous day of the target interval. The second timing may be immediately before the target interval or may be during the target interval.

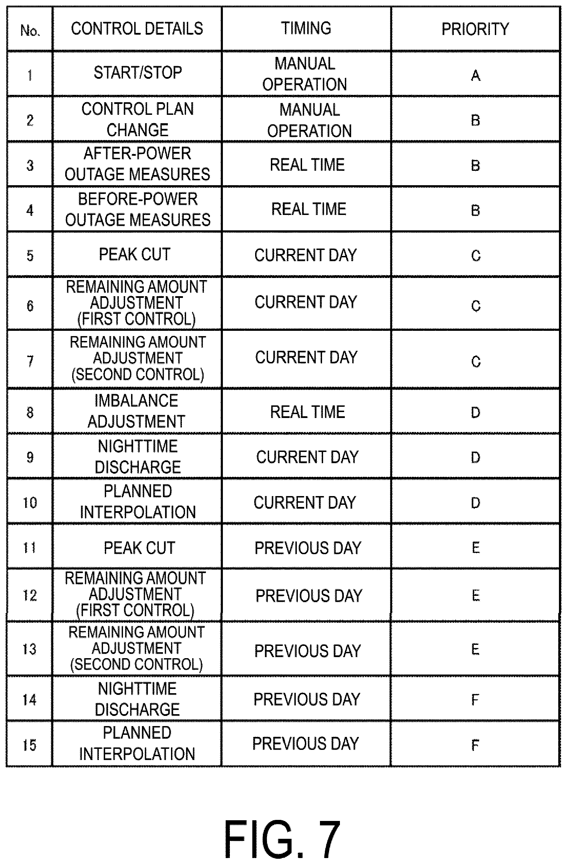

As illustrated in FIG. 7, the charge-discharge control for different purposes of use of the power storage apparatus 120 includes start/stop, control plan change, after-power outage measures, before-power outage measures, and imbalance adjustment in addition to the peak cut, the surplus charge, the remaining amount adjustment, the nighttime discharge, the planned interpolation, and the like described above.

The start/stop includes control starting the power storage apparatus 120 and control to stop the power storage apparatus 120. The start/stop is executed by a manual operation in the target interval.

The control plan change is control to change the charge-discharge plan for the power storage apparatus 120. The control plan change is executed by a manual operation in the target interval.

The after-power outage measures include control to discharge the power storage apparatus 120 in an emergency such as the power outage. The after-power outage measures may include control to charge the power storage apparatus 120 with the surplus power when the surplus power is available in the emergency. The after-power outage measures are executed in real time when the emergency such as the power outage occurs. The power outage may include the planned power outage. The after-power outage measures may be executed using the BCP capacity.

The before-power outage measures are control to charge the power storage apparatus 120 in order to secure the BCP capacity. The BCP capacity may be determined based on the length of power outage time and a predicted value of the power consumption of the facility 100 during the power outage time. The BCP capacity may be predetermined. The before-power outage measures are an example of third control to secure the power storage capacity of the power storage apparatus 120 in order to discharge power to be used in the emergency. The before-power outage measures are executed in real time before the emergency such as the power outage occurs.

The imbalance adjustment is control to reduce a difference between a planned value and an actual value of the demand power of the facility 100. The imbalance adjustment is an example of fourth control to secure at least one of the power storage capacity or the free capacity of the power storage apparatus 120 in order to curb a deviation from the planned value related to the demand power of the facility 100 to be a threshold value or less. The imbalance adjustment is executed in real time in the target interval.

As described above, the peak cut is control (discharge control) to curb the demand power of the facility 100 to the predetermined power or less by discharging the power storage apparatus 120 in the predetermined time interval. A plan for the peak cut may be created on the previous day of the target interval (for example, the first timing described above). The plan for the peak cut may be corrected at timing (for example, the above-described second timing) that is a predetermined time (for example, three hours) before a unit time (for example, 30 minutes) at which the peak cut is assumed to be necessary.

As described above, the remaining amount adjustment is control to adjust the remaining amount of power storage in the power storage apparatus 120. The remaining amount adjustment may include the first control for the peak cut, and may include the second control for the surplus charge. A plan for the remaining amount adjustment may be created on the previous day of the target interval (for example, the first timing described above). The plan for the remaining amount adjustment may be corrected at timing (for example, the above-described second timing) that is a predetermined time (for example, three hours) before a unit time (for example, 30 minutes) at which the remaining amount adjustment is assumed to be necessary.

As described above, the nighttime discharge is control to discharge the power storage apparatus 120 when the predicted value of the price of the purchased power is assumed to be higher than the threshold value. A plan for the nighttime discharge may be created on the previous day of the target interval (for example, the first timing described above). The plan for the nighttime discharge may be corrected at timing (for example, the above-described second timing) that is a predetermined time (for example, three hours) before a unit time (for example, 30 minutes) at which the nighttime discharge is assumed to be necessary.

As described above, the planned interpolation is control to interpolate the charge-discharge plan for the power storage apparatus 120. A plan for the planned interpolation may be created on the previous day of the target interval (for example, the first timing described above). The plan for the planned interpolation may be corrected at timing (for example, the above-described second timing) that is a predetermined time (for example, three hours) before a unit time (for example, 30 minutes) at which the planned interpolation is assumed to be necessary.

Here, A to F are set as priorities of the respective modes of charge-discharge control. FIG. 7 illustrates a case in which the order of the priority is A, B, C, D, E, and F from the highest to the lowest. Specifically, A has the highest priority, and F has the lowest priority.

Under such a background, the power management server 200 creates the charge-discharge plan for the power storage apparatus 120, based on the predicted value of the output power of the solar cell apparatus 110 and the predicted value of the power consumption of the facility 100. The power management server 200 creates the charge-discharge plan for the power storage apparatus 120, based on the priorities of the respective modes of charge-discharge control. The power management server 200 may create the charge-discharge plan for the power storage apparatus 120 at the first timing, and correct the charge-discharge plan for the power storage apparatus 120 at the second timing later than the first timing. The power management server 200 may divide the target interval into unit times (for example, 30 minutes), and create and correct the charge-discharge plan for each unit time.

The priority of each of the peak cut, the remaining amount adjustment (first control), and the remaining amount adjustment (second control) is C (or E). However, these modes of charge-discharge control may have the following priorities. For example, the priority of the peak cut may have a higher priority than the priorities of the remaining amount adjustment (first control) and the remaining amount adjustment (second control). The priority of the remaining amount adjustment (first control) may have the same priority as that of the remaining amount adjustment (second control), may have a higher priority than that of the remaining amount adjustment (second control), or may have a lower priority than that of the remaining amount adjustment (second control).

The priority of the remaining amount adjustment (first control) and the priority of the remaining amount adjustment (second control) may be determined based on a value generated by the curb of the demand power of the facility 100 and a value of the surplus power of the power generation apparatus.

The value generated by the curb of the demand power of the facility 100 is a value obtained by the peak cut. The value obtained by the peak cut is defined by an amount of loss generated when the demand power of the facility 100 exceeds the predetermined power. In other words, the value obtained by the peak cut increases as the amount of loss decreases.

The value of the surplus power of the power generation apparatus is a value obtained by the surplus charge. The value obtained by the surplus charge may be a difference between a price of the purchased power curbed by the surplus charge and a price of the selling power of the surplus power in a case in which the surplus charge is not performed. In such a case, when the price of the purchased power is lower than the price of the selling power, it is more advantageous to perform the reverse flow of the surplus power. Thus, the surplus charge need not be performed, and the remaining amount adjustment (the second control) also need not be performed. In other words, the priority of the remaining amount adjustment (second control) may be the lowest.

When the power generation apparatus is the solar cell apparatus 110, the value obtained by the surplus charge may be an environmental value. The environmental value may be a value obtained in a trading market for a CO₂ emission amount (right). When the environmental value is prioritized, the priority of the remaining amount adjustment (second control) may be higher than that of the remaining amount adjustment (first control).

The priority of the charge-discharge control assumed at the second timing (for example, the current day) may be higher than the priority of the charge-discharge control assumed at the first timing (for example, the previous day). In other words, the priorities of the peak cut, the remaining amount adjustment (first control), the remaining amount adjustment (second control), the nighttime discharge, and the planned interpolation assumed on the previous day may be higher than the priorities of the peak cut, the remaining amount adjustment (first control), the remaining amount adjustment (second control), the nighttime discharge, and the planned interpolation assumed on the current day.

In FIG. 7, although the priority of the surplus charge is not mentioned, it is assumed that the surplus charge is executed when the power storage apparatus 120 has the free capacity and the surplus power. The priority of the surplus charge may be C as in the case of the peak cut although not particularly limited thereto. It should be noted that the surplus charge is not executed simultaneously with the peak cut.

### Power Management Method

A power management method according to the embodiment will be described below.

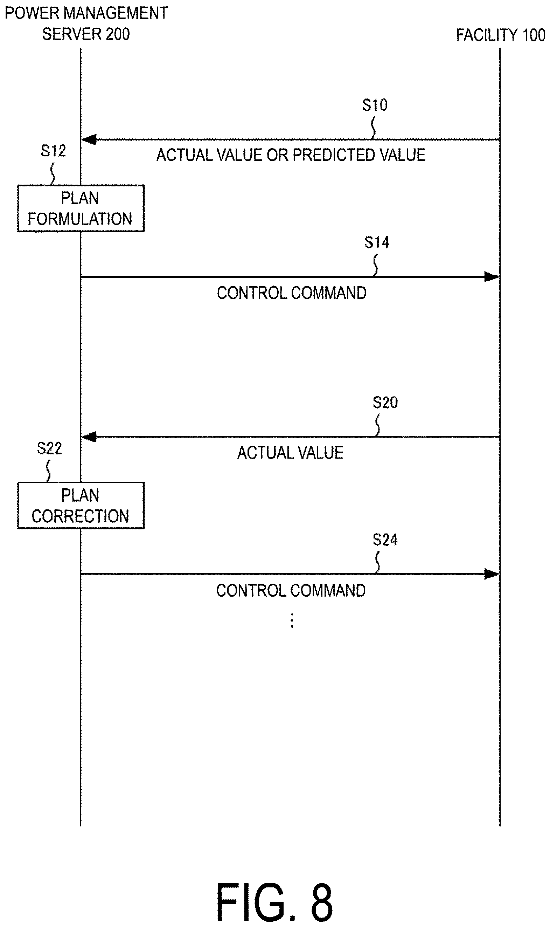

As illustrated in FIG. 8, in step S10, the power management server 200 may receive the actual value of the demand power or the power consumption of the facility 100 from the facility 100 (for example, the measurement device 160). The power management server 200 may receive the actual value of the output power of the solar cell apparatus 110 from the facility 100. The power management server 200 may receive the predicted value of the demand power or the power consumption of the facility 100 from the facility 100 (for example, the measurement device 160). The power management server 200 may receive the predicted value of the output power of the solar cell apparatus 110 from the facility 100. The power management server 200 may receive the power generation impact information, the power outage impact information, and the like from the external server 300.

In step S12, the power management server 200 creates the charge-discharge plan for the power storage apparatus 120, based on the predicted value of the output power of the solar cell apparatus 110 and the predicted value of the power consumption of the facility 100. In creating the charge-discharge plan for the power storage apparatus 120, the priorities of the respective modes of charge-discharge control are used. Step S12 is an example of the first timing.

In step S14, the power management server 200 transmits the control command to the facility 100 in accordance with the charge-discharge plan created in step S12. The control command may be transmitted for each target interval or may be transmitted for each unit time included in the target interval.

Note that, in FIG. 8, the processing in steps S10 to S14 may be considered to be processing executed before the target interval.

In step S20, the power management server 200 may receive the actual value of the demand power or the power consumption of the facility 100 from the facility 100 (for example, the measurement device 160). The power management server 200 may receive the actual value of the output power of the solar cell apparatus 110 from the facility 100. The power management server 200 may receive the latest information of the predicted value of the demand power or the power consumption of the facility 100 from the facility 100. The power management server 200 may receive the latest information of the predicted value of the output power of the solar cell apparatus 110 from the facility 100. The power management server 200 may receive the latest information of the power generation impact information, the power outage impact information, and the like from the external server 300.

In step S22, the power management server 200 corrects the charge-discharge plan for the power storage apparatus 120 based on the actual value of the output power of the solar cell apparatus 110 and the actual value of the power consumption of the facility 100. The power management server 200 may correct the charge-discharge plan for the power storage apparatus 120 based on the latest information of the predicted value of the output power of the solar cell apparatus 110 and the latest information of the predicted value of the power consumption of the facility 100. In correcting the charge-discharge plan for the power storage apparatus 120, the priorities of the respective modes of charge-discharge control are used. Step S22 is an example of the second timing.

In step S24, the power management server 200 transmits the control command to the facility 100 in accordance with the charge-discharge plan corrected in step S22. The control command may be transmitted for each target interval or may be transmitted for each unit time included in the target interval.

Note that, in FIG. 8, the processing in steps S20 to S24 may be considered to be processing executed during the target interval.

### Actions and Effects

In the embodiment, the power management server 200 creates the charge-discharge plan for the power storage apparatus 120, based on the priorities of the two or more modes of charge-discharge control for different purposes of use of the power storage apparatus 120. The priorities of the two or more modes of charge-discharge control include the first control for the peak cut and the second control for the surplus charge. According to such a configuration, in view of the possibility that although the peak cut and the surplus charge are not executed at the same time, the pieces of control therefor (the first control and the second control) are contradictory, the priorities thereof are set, and thus the charge-discharge plan for the power storage apparatus 120 can be appropriately created.

### Other Embodiments

Although the present invention is described by the above-described embodiments, it should not be understood that the description and the drawings, which form a part of this disclosure, limit this invention. Various alternative embodiments, examples, and operational techniques will be apparent from this disclosure to those skilled in the art.

In the disclosure described above, although creation and correction are used as different terms, correction may be read as creation since only timings are different. Creation and correction may be read as formulation.

In the disclosure described above, the first control does not include the peak cut, but the first control may be a concept including the peak cut.

In the disclosure described above, the second control does not include the surplus charge, but the second control may be a concept including the surplus charge.

In the disclosure described above, the case has been exemplified in which the charge-discharge control of the power storage apparatus 120 is executed based on the control command received from the power management server 200. However, the embodiment is not limited to this example. The charge-discharge control of the power storage apparatus 120 may be autonomously executed by the EMS 150. For example, the imbalance adjustment may be autonomously executed by the EMS 150 in a second cycle (for example, one minute).

Although not particularly mentioned in the above disclosure, the predicted value of the demand power of the facility 100 may be predicted by learning the past demand power. The learning may include a time zone, a day of the week, a season, and weather (solar radiation amount, temperature, humidity, and the like) in addition to the past demand power. The learning may be machine learning or deep learning as typified by artificial intelligence (AI).

Although not particularly mentioned in the above disclosure, the predicted value of the output power of the solar cell apparatus 110 may be predicted by learning the past output power. The learning may include a time zone, a day of the week, a season, and weather (solar radiation amount, temperature, humidity, and the like) in addition to the past demand power. The learning may be machine learning or deep learning as typified by AI.

The above disclosure illustrates the case in which the power management server 200 is an example of the power management apparatus. However, the disclosure described above is not limited to this example. The power management apparatus may be the EMS 150.

Although not particularly mentioned in the above disclosure, the output power of the fuel cell apparatus 130 may be taken into consideration in creating the charge-discharge plan for the power storage apparatus 120. When the reverse power flow of the output power of the fuel cell apparatus 130 is recognized, the fuel cell apparatus 130 may be treated as the power generation apparatus as in the solar cell apparatus 110. The output power of the fuel cell apparatus 130 may be assumed to be the rated output power.

The above disclosure illustrates the case in which the solar cell apparatus 110 is installed in the facility 100 as the power generation apparatus. However, the embodiment is not limited to this example. The power generation apparatus may be one or more power generation apparatuses selected from the fuel cell apparatus, a wind power generation apparatus, a water power generation apparatus, a geothermal power generation apparatus, and a biomass power generation apparatus.

The above disclosure illustrates the case in which the EMS 150 is provided in the facility 100. However, the disclosure described above is not limited to this example. The EMS 150 may be provided by a cloud service made utilizing a server on the network 11.

Although not particularly mentioned in the above disclosure, power may be expressed as an instantaneous value (W/kW) or an integrated value per unit time (Wh/kWh).

The above disclosure may have the following problems and effects.

Specifically, the power storage apparatus is used for a variety of purposes in addition to BCP. Examples of the purpose of using the power storage apparatus are considered to include a purpose of charging the power storage apparatus with the surplus power of the power generation apparatus such as the solar cell apparatus (hereinafter, surplus charge purpose) and a purpose of discharging power for curbing the peak power in a predetermined time interval (for example, 30 minutes) to a threshold value or less from the power storage apparatus (hereinafter, peak cut purpose).

In such a case, in order to achieve the surplus charge purpose, it is necessary to secure the free capacity for charging the surplus power in advance. On the other hand, in order to achieve the peak cut purpose, it is necessary to secure the power storage capacity (which may be referred to as the remaining amount of power storage as described above) in advance by charging the power storage apparatus with power for curbing the peak power.

As a result of intensive studies on the assumption of the above-described case, the inventor has focused on the point that the two or more modes of charge-discharge control for different purposes are contradictory, and has found the necessity of appropriately creating the charge-discharge plan for the power storage apparatus on the assumption of the two or more modes of charge-discharge control.

According to the disclosure described above, the power management apparatus and the power management method that can appropriately create the charge-discharge plan for the power storage apparatus can be provided.

### REFERENCE SIGNS

1 Power management system, 11 Network, 12 Power system, 100 Facility, 110 Solar cell apparatus, 120 Power storage apparatus, 130 Fuel cell apparatus, 140 Load device, 150 EMS, 151 First communicator, 152 Second communicator, 153 Controller, 160 Measurement device, 161 Measurement device, 162 Measurement device, 163 Measurement device, 200 Power management server, 210 Manager, 220 Communicator, 230 Controller, 300 External server

## Claims

1. A power management apparatus comprising:
a manager configured to manage a facility comprising a power generation apparatus and a power storage apparatus; and
a controller configured to create a charge-discharge plan for the power storage apparatus, based on priorities of two or more modes of charge-discharge control for different purposes of use of the power storage apparatus,
wherein the two or more modes of charge-discharge control comprise at least first control to secure a power storage capacity of the power storage apparatus to curb demand power of the facility to a predetermined power or less by discharging the power storage apparatus in a predetermined time interval, and second control to secure a free capacity of the power storage apparatus to charge the power storage apparatus with surplus power of the power generation apparatus.

2. The power management apparatus according to claim 1, wherein priorities of the first control and the second control are determined based on a value generated by the curb of the demand power of the facility and a value of the surplus power of the power generation apparatus.

3. The power management apparatus according to claim 1, wherein a priority of the first control is higher than a priority of the second control.

4. The power management apparatus according to any one of claims 1 to 3, wherein
the controller creates the charge-discharge plan for the power storage apparatus at first timing and corrects the charge-discharge plan for the power storage apparatus at second timing later than the first timing, and
a priority of the charge-discharge control assumed at the second timing is higher than a priority of the charge-discharge control assumed at the first timing.

5. The power management apparatus according to any one of claims 1 to 4, wherein the first control comprises control to curb the demand power of the facility to the predetermined power or less by discharging the power storage apparatus in the predetermined time interval.

6. The power management apparatus according to any one of claims 1 to 5, wherein the second control comprises control to charge the power storage apparatus with the surplus power of the power generation apparatus.

7. The power management apparatus according to any one of claims 1 to 6, wherein the two or more modes of charge-discharge control comprise at least one of third control to secure the power storage capacity of the power storage apparatus to discharge power to be used in an emergency or fourth control to secure at least one of the power storage capacity or the free capacity of the power storage apparatus to curb a deviation from a planned value related to the demand power of the facility to a threshold value or less.

8. A power management method comprising:
managing a facility comprising a power generation apparatus and a power storage apparatus; and
creating a charge-discharge plan for the power storage apparatus, based on priorities of two or more modes of charge-discharge control for different purposes of use of the power storage apparatus,
wherein the two or more modes of charge-discharge control comprise at least first control to secure a power storage capacity of the power storage apparatus to curb demand power of the facility to a predetermined power or less in a predetermined time interval, and second control to secure a free capacity of the power storage apparatus to charge the power storage apparatus with surplus power of the power generation apparatus.
